(19) Europäisches Patentamt

European Patent Office

Office européen des brevets

(11) **EP 0 716 967 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.⁷: **B60T 8/00**

(21) Anmeldenummer: **95117243.6**

(22) Anmeldetag: **02.11.1995**

(54) **Verfahren zur Bestimmung von Dauerbremsanteilen bei einem Fahrzeug**

Procedure for determining permanent braking periods in a vehicle

Procédé pour déterminer des périodes de freinage permanent dans un véhicule

(84) Benannte Vertragsstaaten:
**FR GB IT NL SE**

(30) Priorität: **15.12.1994 DE 4444650**

(43) Veröffentlichungstag der Anmeldung:
**19.06.1996 Patentblatt 1996/25**

(73) Patentinhaber: **DaimlerChrysler AG**
**70567 Stuttgart (DE)**

(72) Erfinder:
 • **Aminpour, Ali**
  **D-71334 Waiblingen (DE)**
 • **Reiner, Michael**
  **D-70736 Fellbach (DE)**

(56) Entgegenhaltungen:
WO-A-93/12962      DE-A- 4 226 940
DE-A- 4 230 101      DE-C- 4 308 128
US-A- 5 221 127

**Beschreibung**

Die Erfindung betrifft ein Verfahren zur Bestimmung von Dauerbremsanteilen.

Aus der DE 43 08 128 C1 ist ein gattungsgemäßes Verfahren zur Bestimmung der Fahrbahnlängsneigung bekannt, wobei die Raddrehzahlen kontinuierlich erfaßt und daraus die mittleren Radgeschwindigkeiten der Räder an der freilaufenden und an der angetriebenen Achse ermittelt werden. Aus diesen Radgeschwindigkeiten wird dann die Schlupfdifferenz und die Verzögerung des Fahrzeugs berechnet. Anhand einer Vorzeichenauswertung der Schlupfdifferenz und der Verzögerung wird auf Abwärts-, Aufwärts- oder horizontale Fahrt geschlossen.

Aus der DE 42 30 295 A1 ist es ferner bekannt, die Raddrehzahlen dann zu ermitteln, wenn keine Bremsbetätigung vorliegt und wenn das Antriebsmoment zumindest kleiner ist als ein Schwellenwert; das Fahrzeug also wenigstens näherungsweise frei rollt. Die dabei ermittelten Differenzen zwischen den Raddrehzahlen werden als auf unterschiedlichen Abrollumfängen der einzelnen Räder beruhend gewertet.

Mit den abgeglichenen Raddrehzählen kann eine genauere Bestimmung der Fahrzeuggeschwindigkeit erfolgen. Ebenso kann bei Antriebsschlupfregelungen oder bei Antiblockiersystemen genauer der Reifenschlupf der einzelnen Räder bestimmt werden.

Aus dem Verfahren gemäß der DE 42 30 295 A1 ist es jedoch nicht möglich, einen bei dem Fahrzeug auftretenden Dauerbremsanteil zu erkennen, wenn dies nicht über ein an die Betätigung der Dauerbremse gekoppeltes Signal der Steuereinheit signalisiert wird.

Des weiteren ist es aus der DD 266 771 A5 bekannt, während der Betätigung der Dauerbremse die Raddrehzahlen zu erfassen und dann, wenn eine Blokkierneigung der Räder festgestellt wird, die Bremskraft zu regeln, so daß ein Blockieren der Räder zuverlässig verhindert wird. Dies ist die Anwendung eines Antiblokkiersystems auf eine Dauerbremse.

Ferner ist es aus der DE 40 19 886 C1 bekannt, in einem Geschwindigkeitsbereich zwischen 20 und 40 km/h aus der Differenz zwischen den Raddrehzahlen der Vorderachse und der Hinterachse zu schließen, ob eine Bremswirkung vorliegt. Dabei wird in dieser Schrift ausgeführt, daß es nicht möglich ist, außerhalb dieses Geschwindigkeitsbereichs aus der Raddrehzahldifferenz auf das Vorhandensein einer Bremswirkung zu schließen. Eine Raddrehzahldifferenz zwischen Vorderachse und Hinterachse wird oberhalb des genannten Geschwindigkeitsbereichs darauf zurückgeführt, daß ein über- bzw. untersteuerndes Fahrzeugverhalten gegeben ist.

Aufgabe der Erfindung ist es, das gattungsgemäß zugrundegelegte Verfahren dahingehend zu verbessern, daß es ermöglicht, momentan wirkende Dauerbremsanteile zu erkennen.

Diese Aufgabe wird bei Zugrundelegung des gattungsgemäßen Verfahrens erfindungsgemäß durch die kennzeichnenden Merkmale von Anspruch 1 gelöst.

Die Bestimmung der Dauerbremsanteile basiert auf der Differenzdrehzahl zwischen der Drehzahl der Räder an einer angetriebenen Achse und der Drehzahl der Räder an einer nicht angetriebenen Achse. Diese Differenzdrehzahl wird in einem ersten Schritt für frei rollende Antriebsräder bestimmt und entspricht einem Abgleich der Raddrehzahlen. Im weiteren Verlauf der Fahrt wird dann auf einen antriebsfrei rollenden Zustand der Antriebsachse erkannt, wenn einerseits die Betriebsbremse nicht betätigt ist und andererseits die Differenzdrehzahl geringer ist als bei dem frei rollenden Zustand der Antriebsachse. Die Differenzdrehzahl ist dabei vorzeichenbehaftet und kann deshalb auch betragsmäßig ansteigen. Aus der Differenz zwischen der Differenzdrehzahl bei frei rollendem Zustand und der Differenzdrehzahl bei antriebsfrei rollendem Zustand der Antriebsachse wird auf eine Dauerbremswirkung geschlossen.

Unter Dauerbremse ist allgemein eine über den Antriebsstrang auf die angetriebene Achse einwirkende Anordnung zu verstehen, die ein Bremsmoment erzeugt und die geeignet ist, dieses Bremsmoment ununterbrochen und unbeschadet über einen großen Zeitraum aufzubringen. Es werden insbesondere Motorbremsen und Retarder darunter zusammengefaßt. Es kann aber auch schon das alleinige Motorschleppmoment erkannt werden. Aus der Größe der Differenz zwischen den Differenzdrehzahlen bei frei rollender Antriebsachse und bei antriebsfrei rollender Antriebsachse kann auf die Quelle des Dauerbremsmoments geschlossen werden. Dabei unterscheidet sich ein frei rollender Zustand der Antriebsachse von einem antriebsfrei rolleden Zustand der Antriebsachse dadurch, daß bei dem antriebsfrei rollenden Zustand Kräfte über die Fahrzeugräder auf die.Fahrbahn übertragen werden, wobei die Resultierende dieser Kräfte keine Beschleunigung des Fahrzeugs bewirkt.

Zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigt:

Fig. 1    ein schematisches Flußdiagramm eines erfindungsgemäßen Verfahrens und

Fig. 2    den zeitlichen Verlauf der Differenzdrehzahl bei einem frei rollenden Zustand der Antriebsräder sowie den zeitlichen Verlauf bei auf die Antriebsräder einwirkenden Dauerbremsen.

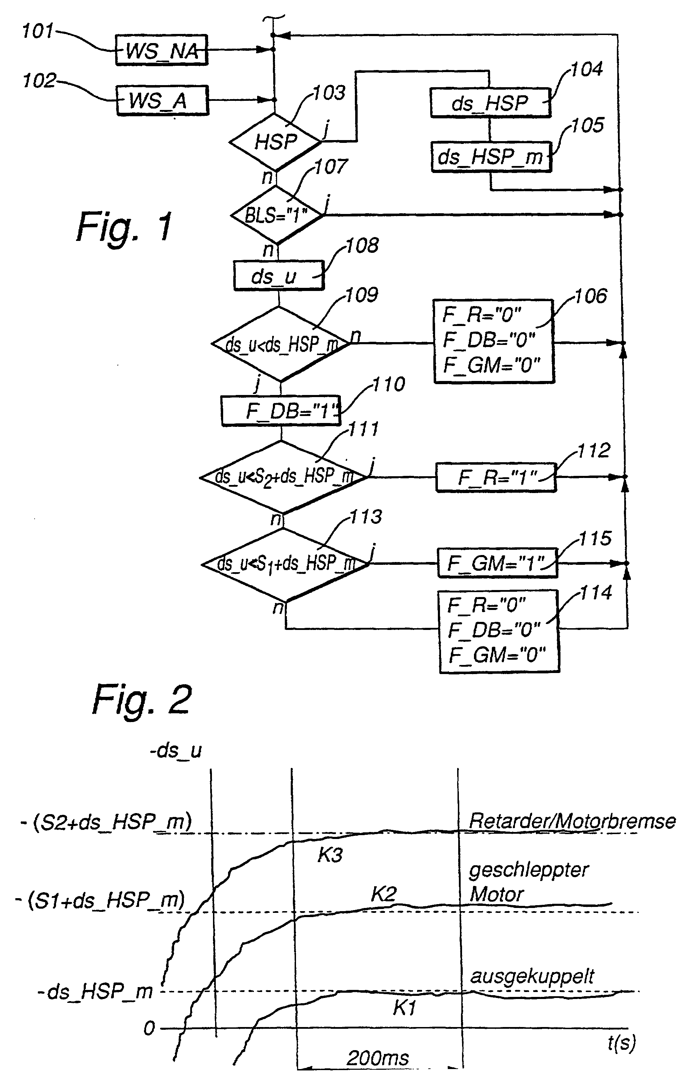

Die Fig. 1 zeigt ein Flußdiagramm eines erfindungsgemäßen Verfahrens. Bei diesem Verfahren wird der Wert für die Differenzdrehzahl zwischen den Rädern einer nicht angetriebenen Achse und den Rädern einer angetriebenen Achse während eines frei rollenden Zustandes der angetriebenen Achse ermittelt. Ein Verfahren zur Erkennung eines frei rollenden Zustandes der Antriebsachse und zur Bestimmung der Differenzdrehzahl während eines frei rollenden Zustandes der Antriebsachse ist in der nicht vorveröffentlichten Patentanmeldung DE 44 43 522 A1 enthalten, auf deren Inhalt ausdrücklich verwiesen wird. In dieser Schrift DE 44 43 522 A1 ist im übrigen auch beschrieben wie ein stationärer Zustand aus dem zeitlichen Verlauf einer Größe, beispielsweise der Raddrehzahlen, ermittelt wird. Auch darauf wird Bezug genommen.

In den Schritten 101 und 102 werden die Raddrehzahlen ws_NA der nicht angetriebenen Achse bzw. die Raddrehzahlen ws_A der angetriebenen Achse, die für einen stationären Zustand ermittelt wurden zugeführt. Die Drehzahlen werden nur dann berücksichtigt, wenn aus der Differenz zwischen der Raddrehzahl an den beiden Seiten einer Achse darauf geschlossen werden kann, daß eine Kurvenfahrt nicht vorliegt. Eine Kurvenfahrt führt nämlich aufgrund der unterschiedlichen Kurvenradien sowohl der einzelnen Räder als auch der einzelnen Achsen zu einer erhöhten Differenzdrehzahl, was zu Fehlinterpretationen der Differenzdrehzahl führen könnte. Im Schritt 103 wird überprüft, ob ein frei rollender Zustand HSP der angetriebenen Achse vorliegt. Die Kriterien für einen frei rollenden Zustand HSP sind in der nicht vorveröffentlichten Patentanmeldung DE 44 43 522 A1 beschrieben.

Wird ein frei rollender Zustand der angetriebenen Achse festgestellt, so wird im Schritt 104 die Differenzdrehzahl ds_HSP des frei rollenden Zustand aus der Differenz zwischen den Drehzahlen ws_NA und ws_A nach der Gleichung

$$ds\_HSP = \frac{ws\_A\text{-}ws\_NA}{ws\_NA}$$

ermittelt. Die so ermittelte Differenzdrehzahl ds hat den Vorteil, daß sie eine dimensionslose Größe ist, die nicht von der Fahrzeuggeschwindigkeit abhängig ist. Aus dem ermittelten aktuellen Wert der Differenzdrehzahl wird im Schritt 105 unter Berücksichtigung der während der selben Fahrt ermittelten Differenzdrehzahlen des frei rollenden Zustandes der Mittelwert ds_HSP_m nach der Beziehung

$$ds\_HSP\_m = \frac{(n\text{-}1)^* ds\_HSP\_m + ds\_HSP}{n},$$

wobei n die Anzahl der aufgetretenen Zustände frei rollender Antriebsräder ist, berechnet. Dieser Mittelwert ds_HSP_m wird als Wert der Differenzdrehzahl für den frei rollenden Zustand der Antriebsachse verwendet. Anschließend wird zum Schritt 101 zurückgesprungen und auf neue, einem stationären Zustand zugeordnete Werte der Drehzahlen gewartet.

Der Schritt 107 wird durchgeführt, wenn im Schritt 103 erkannt wurde, daß ein frei rollender Zustand der Antriebsachse nicht gegeben ist. Die angetriebene Achse ist also entweder angetrieben oder gebremst. Im Schritt 107 wird deshalb über das Signal des Bremslichtschalters oder über Bremsdrücke oder aus Raddrehzahlen überprüft, ob die Betriebsbremse betätigt ist. Ist dies der Fall so wird zum Schritt 101 zurückgesprungen. Andernfalls wird im Schritt 108 die Differenzdrehzahl ds_u aus den Drehzahlen ws_NA und ws_A nach der Gleichung

$$ds\_u = \frac{ws\_A\text{-}ws\_NA}{ws\_NA}$$

berechnet. Im Schritt 109 wird dann überprüft, ob diese Differenzdrehzahl ds_u einem antriebsfrei rollendem Zustand zugeordnet werden kann. Dies geschieht durch Vergleich mit der Differenzdrehzahl ds_HSP_m des frei rollenden Zustands der angetriebenen Achse, wobei auch die Vorzeichen der Differenzdrehzahlen zu beachten sind. Ist die Differenzdrehzahl ds_u größer als der Mittelwert ds_HSP-m, so wird auf die angetriebene Achse ein Antriebsmoment ausgeübt. Es wird zum Schritt 106 gegangen und die Zeiger, die ein Dauerbremsmoment repräsentieren werden zurückgesetzt, es sind also keine Dauerbremsen am Antriebsstrang wirksam. Ist die Differenzdrehzahl ds_u kleiner als der Mittelwert ds_HSP_m so wird auf eine antriebsfrei rollende Antriebsachse geschlossen. An der Antriebsachse greifen nur die Schleppmomente des Motors und eventuell einer Dauerbremsanlage an. Im Schritt 110 wird ein Zeiger F_DB gesetzt, der anzeigt, daß ein Dauerbremsmoment am Antriebsstrang angreift.

Die Schritte 111 bis 115 dienen dazu die Quelle des Dauerbremsmoments festzustellen. Dies geschieht durch eine Auswertung des Betrages der Differenz aus den Differenzdrehzahlen. Dieser Betrag läßt einerseits auf die Größe des Bremsmoments, das durch die Dauerbremse erzeugt wird schließen und indirekt daraus auf die Quelle. Dazu sind die Schwellenwerte S1 und S2 vorgegeben. Zu diesen Schwellenwerten wird die Differenzdrehzahl des frei rollenden Zustands ds_HSP_m addiert. Dies trägt dem Einfluß durch unterschiedliche Abrollumfänge der Räder an den verschiedenen Achsen beziehungsweise dem individuellen Verhalten und den individuellen Gegebenheiten des Fahrzeugs Rechnung. Das Vorzeichen der Schwellenwerte bestimmt nur die Beziehung zwischen den Verhältnisgleichungen und ist von der Definition und dem Vorzeichen der Differenzdrehzahl ds_u abhängig.

Im Schritt 111 wird überprüft, ob die Ungleichung

$$ds\_u < S2 + ds\_HSP\_m$$

wahr ist, wobei der Schwellenwert S2 ein *negatives* Vorzeichen aufweist. Ist dies der Fall, so wird im Schritt 112 ein Zeiger F_R gesetzt, der den Betrieb eines Retarders oder einer Motorbremse signalisiert. Andernfalls wird im Schritt 113 überprüft ob die Ungleichung

$$ds\_u < S1 + ds\_HSP\_m$$

wahr ist. Ist dies der Fall, so wird auf einen geschleppten Motor geschlossen und im Schritt 115 ein Zeiger F_GM gesetzt. Andernfalls werden im Schritt 114 die Zeiger F_DB, F_R und F_GM jeweils auf "0" zurückgesetzt, da das Fahrzeug frei rollt und eine Dauerbremse nicht in Betrieb ist.

Die Werte der Zeiger, also die Präsenz eines Dauerbremsmomentes und ggf. auch die Quelle des Bremsmomentes, können dann in anderen Programmen im Fahrzeug zur Steuerung beispielsweise des Bremsdrucks des Fahrzeugs oder an dem Hänger des Fahrzeugs verwendet werden. So kann beispielsweise bei einer Bremsbetätigung der an der Antriebsachse aufgebaute Bremsdruck um den Anteil des Dauerbremsmomentes der angetriebenen Achse gegenüber der nicht angetriebenen Achse reduziert werden. An dem Hänger kann der in den Radbremszylindern erzeugte Bremsdruck entsprechend erhöht werden, um das zusätzliche Bremsmoment am Zugfahrzeug zu erhöhen. Dies erhöht die Fahrstabilität des Fahrzeugzuges, wobei allerdings eine zu starke Beanspruchung der Anhängerbremsen vermieden werden muß. Der Betrag des Bremsmoments kann dabei aus der Größe der Differenz der Differenzdrehzahlen ds_u, ds_HSP_m ermittelt werden.

Die Fig. 2 zeigt den Verlauf einer Kurve für die Differenzdrehzahl über der Zeit und bei verschiedenen Betriebszuständen des Fahrzeugs. Aufgetragen ist die Differenzdrehzahl -ds_u, das Vorzeichen beruht allein auf der Definition der Differenzdrehzahl.

Es ist festzustellen, daß die Kurven nach einem anfänglichen Anpassungsvorgang an den Fahrzustand einen asymptotischen Verlauf aufweisen. Da die Differenzdrehzahl ds_u nur dann ausgewertet wird, wenn sie in einem stationären Zustand ist - das heißt wenn unter anderem die Zeitableitung der Differenzdrehzahl ds_u einen Grenzwert unterschritten hat (bezüglich der genauen Definition des stationären Zustandes wird auf die DE 44 43 522 A1 verwiesen) - werden nur Werte aus dem asymptotischen Bereich der Kurve zur Bestimmung des Dauerbremsanteils verwendet. Zusätzlich kann nach dem Unterschreiten des Grenzwertes für die Erkennung des stationären Zustandes noch eine Wartezeit von beispielsweise 200 ms abgewartet werden, um sicherzustellen, daß die Raddrehzahlen sich an den Fahrzustand angepaßt haben.

Ist ein antriebsfrei rollender Zustand des Fahrzeugs gegeben, bei dem keine Dauerbremsanteile vorliegen, so konvergiert die Differenzdrehzahl ds_u gemäß dem Verlauf der Kurve K1 auf den Wert ds_HSP_m des frei rollenden Zustands. Die Kurve K2 konvergiert auf den Wert S1+ds_HSP_m, es wird auf einen geschleppten Motor geschlossen. Der Verlauf der Kurve K3 stellt das Verhalten der Differenzdrehzahl ds_u beim Betrieb einer Motorbremse dar. Die Differenzdrehzahl konvergiert auf den Wert S2+ds_HSP_m. Es ist dieses Verhalten der Differenzdrehzahl, das es erlaubt in dem Verfahren gemäß der Erfindung auf den Betrieb einer Dauerbremse zu schließen.

Ist ein antriebsfrei rollender Zustand Zustand des Fahrzeugs gegeben, bei dem Dauerbremsanteile vorliegen, dann kann die aus den Dauerbremsanteilen resultierende Abbremsung ermittelt werden, wenn zusätzlich die Fahrbahnneigung in Fahrtrichtung und eine die Fahrtwiderstände repräsentierende Größe bekannt ist. Die Fahrbahnneigung p kann dabei gemäß der nicht vorveröffentlichten Patentanmeldung DE 44 43 522 A1 aus den Raddrehzahlen abgeleitet werden oder mit einer Neigungssensorik direkt gemessen werden. Die Fahrtwiderstände r können als fahrzeugtypspezifische Konstante vorgegeben werden. Als Hauptbestandteile geht der Rollwiderstand und der Luftwiderstand in die Fahrtwiderstände ein. Die Vorgabe der Fahrtwiderstände kann daher auch in Form eines geschwindigkeitsabhängigen Kennfeldes angegeben sein. Die Rollwiderstände eines Fahrzeugs können beispielsweise während einer Kalibrierfahrt gemessen werden. Ist die Fahrbahnneigung p und der Fahrwiderstand r in der Dimension einer Fahrzeugverzögerung gegeben, so ist berechnet sich die aus den Dauerbremsanteilen resultierende Abbremsung z_DB nach der Gleichung:

$$z\_DB = z\_ist - p - r,$$

wobei z_ist der Wert der aktuellen Fahrzeugverzögerung ist, der beispielsweise aus den Raddrehzahlen abgeleitet ist.

**Patentansprüche**

1. Verfahren zur Bestimmung von Dauerbremsanteilen bei einem Fahrzeug, wobei das Fahrzeug eine Betriebsbremsanlage und ein Antriebsaggregat aufweist und wobei die Raddrehzahlen der Räder an angetriebenen Achsen (ws_A) und an nicht angetriebenen Achsen (ws_NA) erfaßt werden (102 bzw. 101) und aus der Differenz dieser Raddrehzahlen (ws_A, ws_NA) eine Differenzdrehzal (ds_HSP bzw. ds_u) bestimmt werden kann, **dadurch gekennzeichnet,** **daß** zumindest einmal ein frei rollender Zustand der zumindest einen angetriebenen Achse erkannt wird (Verzweigung j aus 103) und daß für diesen Zustand zumindest der Wert einer Differenzdrehzahl (ds_HSP) zwischen der Raddrehzahl einer angetriebenen Achse und der Drehzahl einer nicht angetriebenen Achse ermittelt wird (104), und **daß** dann, wenn die Betriebsbremse nicht betätigt ist (Verzweigung n aus 107), auf einen Zustand antriebsfrei rollender Antriebsachse geschlossen wird (Verzweigung n aus 109), wenn die Differenzdrehzahl (ds_u) geringer ist als die einem frei rollenden Zustand der angetriebenen Achse entsprechende Differenzdrehzahl (ds_HSP), und **daß** aus der Differenz zwischen der Differenzdrehzahl (ds_HSP) bei frei rollendem Zustand und der Differenzdrehzahl (ds_u) bei antriebsfrei rollendem Zustand auf eine Dauerbremswirkung geschlossen wird (110).

2. Verfahren nach Anspruch 1,
   **dadurch gekennzeichnet,**
   **daß** die Werte der Differenzdrehzahl (ds_HSP bzw. ds_u) während einem frei rollenden und/oder während einem antriebsfrei rollendem Zustand dann ermittelt werden, wenn der Zustand als stationärer Zustand erkannt wird.

3. Verfahren nach Anspruch 1,
   **dadurch gekennzeichnet,**
   **daß** dann auf eine Dauerbremswirkung geschlossen wird, wenn die Differenz aus den Differenzdrehzahlen einen Schwellenwert überschreitet.

4. Verfahren nach Anspruch 3,
   **dadurch gekennzeichnet,**
   **daß** der Schwellenwert in Abhängigkeit der Differenzdrehzahl bei frei rollendem Zustand ermittelt wird.

5. Verfahren nach Anspruch 1,
   **dadurch gekennzeichnet,**
   **daß** bei jeder Fahrt ein neuer Wert der Differenzdrehzahl (ds_HSP) bei frei rollendem Zustand ermittelt wird (104).

6. Verfahren nach Anspruch 1,
   **dadurch gekennzeichnet,**
   **daß** aus der Differenz zwischen den Differenzdrehzahlen in frei rollendem Zustand und in antriebsfrei rollendem Zustand auf den Erzeuger des Bremsmoments geschlossen wird (111 bzw. 113).

7. Verfahren nach Anspruch 1,
   **dadurch gekennzeichnet,**
   **daß** aufgrund eines erkannten Dauerbremsanteils der aufgrund der Betätigung des Bremspedals zu erzeugende Bremsdruck an der durch die Dauerbremse beaufschlagten Achse um einen der Wirkung der Dauerbremse wenigstens näherungsweise entsprechenden Anteil verringert wird.

8. Verfahren nach Anspruch 1,
   **dadurch gekennzeichnet,**
   **daß** in einem von einem Zugfahrzeug gezogenen Hänger der aufgrund der Betätigung des Bremspedals zu erzeugende Bremsdruck um einen der Wirkung der Dauerbremse wenigstens näherungsweise entsprechenden Anteil erhöht wird.

9. Verfahren nach Anspruch 1,
   **dadurch gekennzeichnet,**
   **daß** beim Auftreten eines antriebsfrei rollenden Zustandes der Antriebsräder die Fahrzeugverzögerung (z_ist) ermittelt wird, wobei aus der ermittelten Fahrzeugverzögerung (z_ist) die aus der Wirkung der Dauerbremse resultierende Verzögerung (z_DB) unter Berücksichtigung eines Wertes für die Fahrwiderstände (r) und eines für den antriebsfrei rollenden Zustand ermittelten Wertes der Fahrbahnneigung (p) berechnet wird.

## Claims

1. A process for the determination of retarding brake fractions in a vehicle, the vehicle having a service braking system and an engine, the wheel speeds of the wheels being measured on drive axles (ws_A) and non-drive axles (ws_NA) (102/101) and it being possible to determine a speed differential (ds_HSP / ds_u) from the difference between these wheel speeds (ws_A, ws_NA),
   **characterised in that**
   a free rolling state of the at least one drive axle is recognised at least once (branch J in 103) and that at least the value of a speed differential (ds_HSP) between the wheel speed of a drive axle and the speed of a non-drive axle is ascertained (104) for this state,
   and that whenever the service brake is not actuated (branch n in 107) a drive-free rolling state of the drive axle is inferred (branch n in 109) if the speed differential (ds_u) is less than the speed differential (ds_HSP) corresponding to a free rolling state of the drive axle,
   and that a retarding brake action is inferred from the difference between the speed differential (ds_HSP) in free rolling state and the speed differential (ds_u) in drive-free rolling state (110).

2. A process in accordance with claim 1,
   **characterised in that**
   the values for the speed differential (ds_HSP / ds_u) in free rolling and/or drive-free rolling state are ascertained if the state is recognised as being a stationary state.

3. A process in accordance with claim 1,
   **characterised in that**
   a retarding braking action is inferred if the difference between the two speed differentials exceeds a threshold value.

4. A process in accordance with claim 3,

**characterised in that**
the threshold value is ascertained dependent upon the speed differential in free rolling state.

5. A process in accordance with claim 1, **characterised in that**
a new value for the speed differential (ds_HSP) in free rolling state is ascertained on each drive (104).

6. A process in accordance with claim 1, **characterised in that**
the generator of the braking torque is ascertained from the difference between the speed differentials in free rolling state and drive-free rolling state (111/113).

7. A process in accordance with claim 1, **characterised in that**
the braking pressure to be generated on the basis of the actuation of the brake pedal at the axle on which the retarding brake acts is reduced by a fraction corresponding at least approximately to the action of the retarding brake on the basis of a recognised retarding brake fraction.

8. A process in accordance with claim 1, **characterised in that**
the brake pressure to be generated on the basis of the actuation of the brake pedal in a trailer drawn by a towcar is increased by a fraction corresponding at least approximately to the action of the retarding brake.

9. A process in accordance with claim 1, **characterised in that**
when a drive-free rolling state of the drive wheels occurs, the vehicle retardation (z_actual) is ascertained, the retardation (z_DB) resulting from the action of the retarding brake being calculated from the vehicle retardation ascertained (z_actual) taking into account a value for the driving resistances (r) and a value for driving surface incline (p) ascertained for drive-free rolling state.

**Revendications**

1. Procédé pour déterminer des composantes de freinage permanent dans un véhicule, dans lequel le véhicule présente une installation de freinage de service et un groupe d'entraînement et dans lequel les vitesses de rotation des roues sur des essieux moteurs (ws_A) et sur des essieux non moteurs (ws_NA) sont saisies (102 ou 101) et, à partir de la différence de ces vitesses de rotation des roues (ws_A, ws_NA), une différence de vitesse de rotation (ds_HSP ou ds_u) peut être déterminée, **caractérisé par le fait**

qu'est saisi au moins une fois un état de roulement en roue libre de l'essieu moteur, dont il y a au moins un, (branchement j à partir de 103) et que pour cet état est déterminée (104) au moins la valeur d'une différence de vitesse de rotation (ds_HSP) entre la vitesse de rotation des roues d'un essieu moteur et la vitesse de rotation d'un essieu non moteur,
et **qu'**alors, si le frein de service n'est pas activé (branchement n à partir de 107), il est conclu à un état de l'essieu moteur roulant sans entraînement par le moteur (branchement n à partir de 109) si la différence de vitesse de rotation (ds_u) est inférieure à la différence de vitesse de rotation (ds_HSP) correspondant à un état de roulement en roue libre de l'essieu moteur,
et **qu'**à partir de la différence entre la différence de vitesse de rotation (ds_HSP) à l'état de roulement en roue libre et la différence de vitesse de rotation (ds_u) à l'état de roulement sans entraînement par le moteur, il est conclu à un effet de freinage permanent (110).

2. Procédé selon la revendication 1, **caractérisé par le fait**
**que** les valeurs de la différence dc vitesse de rotation (ds_HSP ou ds_u) pendant un état de roulement en roue libre et/ou pendant un état de roulement sans entraînement par le moteur sont déterminées lorsque l'état est reconnu comme étal stationnaire.

3. Procédé selon la revendication 1, **caractérisé par le fait**
**qu'**il est conclu à un état de freinage permanent si la différence des différences de vitesse de rotation dépasse, par valeur supérieure, une valeur de seuil.

4. Procédé selon la revendication 3, **caractérisé par le fait**
**que** la valeur de seuil est déterminée en fonction de la différence de vitesse de rotation à l'état de roulement en roue libre.

5. Procédé selon la revendication 1, **caractérisé par le fait**
**qu'**à chaque trajet une nouvelle valeur de la différence des vitesses de rotation (ds_HSP) à l'état de roulement en roue libre est déterminée (104).

6. Procédé selon la revendication 1, **caractérisé par le fait**
**qu'**à partir de la différence entre les différences de vitesse de rotation à l'état de roulement en roue libre et à l'état de roulement sans entraînement par le moteur il est conclu à ce qui produit le couple de freinage (111 ou 113).

7. Procédé selon la revendication 1,

**caractérisé par le fait**
**que** sur la base d'une composante connue de freinage permanent, le système réduit, d'une composante correspondant au moins approximativement à l'effet du freinage permanent, la pression de freinage à produire par l'action de la pédale de frein sur l'essieu qui subit le freinage permanent.

8. Procédé selon la revendication 1,
**caractérisé par le fait**
**que** dans une remorque tirée par un tracteur le système augmente la pression de freinage à produire par l'action de la pédale de frein d'une composante correspondant au moins approximativement à l'effet du freinage permanent.

9. Procédé selon la revendication 1,
**caractérisé par le fait**
**que** lors de l'apparition d'un état de roulement, sans entraînement par le moteur, des roues motrices, la décélération du véhicule (z_est) est déterminée, étant précisé qu'à partir de la décélération, ainsi déterminée, du véhicule (z_est), est calculée la décélération (z_DB) résultant de l'action du freinage permanent en tenant compte d'une valeur pour les résistances à l'avancement (r) et d'une valeur de la pente de la chaussée (p) déterminée pour l'état de roulement sans entraînement par le moteur.

## Fig. 1

## Fig. 2